# EUROPEAN PATENT APPLICATION

(11) **EP 1 661 669 A2**
(43) Date of publication of application: **31.05.2006**
(21) Application number: 05016424.3
(22) Date of filing: 28.07.2005
(51) Int. Cl.: B25J 9/16

(54) **Processing program generating device**

(30) Priority: 02.08.2004 JP 2004225977
(71) Applicant: FANUC LTD, Minamitsuru-gun, Yamanashi 401-0597 (JP)
(72) Inventor: Nagatsuka, Yoshiharu FANUC Dai3virakaramatsu, Minamitsuru-gun Yamanashi 401-0511 (JP); Inoue, Kozo, Gotenba-shi Shizouka 412-0051 (JP); Fukada, Tetsuo, Minamitsuru-gun Yamanashi 403-0022 (JP)
(74) Representative: Schmidt, Steffen J.

(57) **Abstract**

An offline programming device 1, robot control units 2a and 3a, and visual sensors 4 and 5 are connected to each other via a communication line 10. The device 1 stores and displays a shape of a work 6 generated by a CAD, for the work to be processed. Vertexes and edge lines of the work shape are assigned. A straight line processing route is formed by connecting between the assigned vertexes as teaching points. Points at both ends of the assigned edge line are set as teaching points, and the assigned edge line is set as a processing route. A processing program is generated in this way. The processing program is corrected based on a position and a posture of an actual work obtained by acquiring images of the work with the visual sensors 4 and 5. The processing operation of the processing program is simulated, and the work 6 is moved with a carriage 7 so that each axis of the robot is within a stroke limit to avoid the occurrence of interference between the robot and other objects. Alternatively, postures of processing tools 8 and 9 are changed, thereby easily generating the processing program. With this arrangement, the invention provides a processing program generating device that can easily generate a processing program for the robot, without interrupting the processing and without requiring an expensive tool.

## Description

### BACKGROUND OF THE INVENTION

### 1. Field of the Invention

The present invention relates to a processing program generating device that generates a processing program, with an offline programming device using a work to be processed and a robot model, corrects the processing program, and generates a final processing program to be used by a robot to execute the processing.

### 2. Description of the Related Art

In a system that uses a robot for processing a work, for example, removing flashes from a work such as a machine part an arc welding, an offline programming device is employed to generate a processing program using a shape model of the work and a robot model. However, when processing the actual work, the position and a posture of the actual work are different from those of the work prepared by the offline programming device. Therefore, a visual sensor or the like is used to acquire images of the position and the posture of the work, thereby obtaining a positional deviation and a posture deviation of the work based on the obtained images. A processing program generated by the offline programming device is corrected by using these deviations, thereby generating an actual processing program for the processing.

When generating a processing program of a robot by the offline programming device, and also when instructing the processing program using the robot directly, it is necessary to teach each teaching point. Therefore, when the robot processes a work having a complex shape, an extremely large number of teaching steps are necessary for generating the processing program. This makes it difficult to generate the processing program. Particularly when plural robots are used to process the work, the teaching operation becomes very difficult.

There is also another method. After the offline programming device generates a processing program, the visual sensor detects a position and a posture of the work. Deviations between the position and the posture of the work prepared by the processing program and the detected position and the detected posture of the work are corrected so as to generate an actual processing program. In this case, there is a possibility that the instruction to move the robot in excess of a stroke limit (i.e., a movable range) of each axis of the robot in the course of the processing is included. This causes a risk of interrupting the actual processing of the work. Conventionally, there is no method of confirming whether the work is within a permissible range of disposition when the work is processed by the robot. Consequently, it is possible to generate a processing program causing an interruption of the processing in the middle of the processing.

Further, conventionally, an expensive tool such as a turntable for moving the work to be processed is necessary. Depending on the work, the tool must be replaced, which results in an increase in the processing cost.

In order to solve the above problems of the conventional technique, it is an object of the present invention to provide a processing program generating device that can easily generate a processing program of a robot, can execute the processing program without interrupting the processing, and does not require an expensive tool.

### SUMMARY OF THE INVENTION

According to a first aspect of the present invention, there is provided a processing program generating device that generates a processing program for processing a work with a robot, the processing program generating device including: a display means for displaying a shape model of the work on a display screen; a means for assigning both or one of vertexes and an edge line of the shape model of the work displayed on the screen; a means for assigning a posture of a processing tool; a means for generating a route based on both or one of the vertexes and the edge line that are assigned, and generating a provisional processing program so that the processing tool becomes in the assigned posture of the processing tool in the route; a visual sensor that acquires an image of an area of the work processed by the processing tool, and detects a position and a posture of the work; and a means for correcting the generated provisional processing program based on the position and the posture of the work detected by the visual sensor, thereby generating an actual processing program to be used to process the actual work.

According to a second aspect of the present invention, there is provided a processing program generating device that generates a processing program for processing a work with a robot, the processing program generating device including: a display means for displaying a shape model of the work on a display screen; a means for assigning a surface of the work to be processed on the displayed screen, and inputting a processing start point, a processing direction, a pitch amount, and a pitch direction; a means for setting a posture of a processing tool; a means for generating a route which moves on the assigned surface from the processing start point while shifting the route in an input processing direction by the pitch amount, and generating a provisional processing program so that the processing tool becomes in the posture of the processing tool set in each route; a visual sensor that acquires an image of an area of the work processed by the processing tool, and detects a position and a posture of the work; and a means for correcting the generated provisional processing program based on the position and the posture of the work detected by the visual sensor, thereby generating an actual processing program to be used to process the actual work.

According to a third aspect of the present invention, there is provided the processing program generating device according to the first aspect, wherein the means for generating the provisional processing program sets the assigned vertexes as teaching points, sets points at both ends of the assigned edge line as teaching points, sets a straight line route between the teaching point of the assigned vertexes and the other teaching point, sets an edge line route between the assigned teaching points at both ends of the edge line, thereby sequentially obtaining a continuous route in the assigned order of the vertexes and the edge line, and generates the provisional processing program for the generated route so that the processing tool becomes in the assigned posture of the processing tool.

According to a fourth aspect of the present invention, there is provided the processing program generating device according to any one of the first to the third aspects, wherein the means for generating the actual processing program to be used to process the actual work corrects coordinate positions and the posture of the teaching points prepared by the generated provisional processing program, or the points of origin and the posture in a coordinate system that defines the teaching points prepared by the provisional processing program, thereby generating the actual processing program to be used to process the actual work. According to a fifth aspect of the present invention, there is provided the processing program generating device, according to any one of the first to the fourth aspects, wherein the visual sensor includes a camera, and the camera is fitted to a robot that has the processing tool. According to a sixth aspect of the present invention, there is provided the processing program generating device according to any one of the first to the fifth aspects, wherein the processing tool is fitted to plural robots, and each robot processes one work. According to a seventh aspect of the present invention, there is provided the processing program generating device according to any one of the first to the sixth aspects, the processing program generating device further including: a means for simulating the operation of the generated actual processing program to be used to process the actual work, and checking whether the processing can be carried out normally in all the routes; and a means for generating an alarm when an abnormality is detected.

According to an eighth aspect of the present invention, there is provided the processing program generating device according to any one of the first to the sixth aspects, the processing program generating device further including: a means for simulating the operation of the generated actual processing program to be used to process the actual work, and checking whether the work is within a permissible moving range of each axis of the robot in all the routes; and a means for moving the work to a processable position when it is detected that the work exceeds the permissible moving range. According to a ninth aspect of the present invention, there is provided the processing program generating device according to the eighth aspect, the processing program generating device further including: a first robot that has the processing tool and processes the work; and a second robot that holds the work, wherein the second robot constitutes the means for moving the work to the processable position. According to a tenth aspect of the present invention, there is provided the processing program generating device according to the eighth aspect, wherein the work is mounted on a movable carriage, and the carriage constitutes the means for moving the work to the processable position.

According to an eleventh aspect of the present invention, there is provided the processing program generating device according to any one of the first to the tenth aspects, the processing program generating device further including: a means for simulating the operation of the generated actual processing program to be used to process the actual work, and checking the occurrence of interference between the robot and other objects in all the routes; and a means for correcting the position and the posture at the teaching points prepared by the processing program to a position and a posture of avoiding interference when the interference is detected.

According to the present invention, a provisional processing program is generated by assigning vertexes and an edge line of a work shape, based on work shape data and the like that is generated by a computer-aided design system (CAD). Alternatively, a provisional processing program for processing a surface is generated by setting the surface, a processing direction, a processing pitch and a pitch direction. Therefore, in the present invention, the provisional processing program can be generated easily. Further, because the actual processing program is generated from the provisional processing program based on the position and the posture of the actual work that are imaged by the visual sensor, the processing program can be generated easily. Further, because a robot or a carriage is used to change both or one of a position and a posture of the work, both or one of the position and the posture of the work can be corrected so that the work can be processed within a stroke limit of each axis of the robot, without using special tools. Further, it is possible to prevent the robot from interfering with other objects.

These and other objects, features and advantages of the present invention will be more apparent in light of the detailed description of exemplary embodiments thereof as illustrated by the drawings.

### BRIEF DESCRIPTION OF THE DRAWINGS

In the drawings,
Fig. 1 is a schematic diagram of a processing program generating device and a processing system according to a first embodiment of the present invention;
Fig. 2 is a schematic diagram of a processing program generating device and a processing system according to a second embodiment of the present invention;
Fig. 3 is an explanatory diagram of a method of generating a provisional processing program by assigning vertexes in each embodiment;
Fig. 4 is an explanatory diagram of a method of generating a provisional processing program by assigning an edge line in each embodiment;
Fig. 5 is an explanatory diagram of a method of generating a provisional processing program by assigning a surface in each embodiment;
Fig. 6 is an explanatory diagram of a method of setting a posture of a processing tool in each embodiment;
Fig. 7 is a flowchart of generating a processing program in each embodiment;
Fig. 8 is a continuation of the flowchart of generating the processing program in each embodiment;
Fig. 9a is an explanatory diagram of a generated processing route;
Fig. 9b is an explanatory diagram of a processing program for generating a processing route;
Fig. 10 is a block diagram of a processing program generating device according to the present invention; and
Fig. 11 is other block diagram of a processing program generating device according to the present invention.

### DETAILED DESCRIPTION

Processing program generating devices according to embodiments of the present invention are explained below with reference to the drawings.

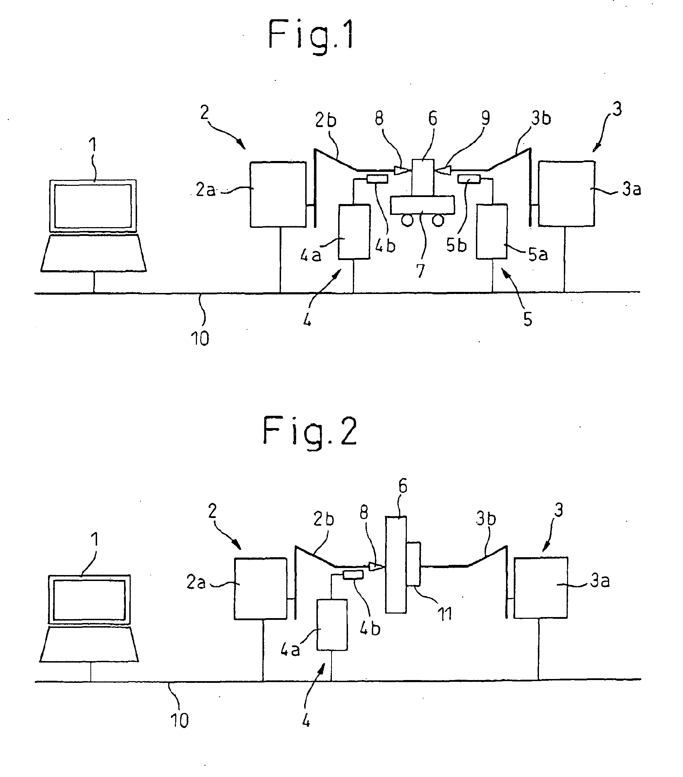

Fig. 1 is a schematic diagram of a processing program generating device (i.e., a program generating and processing system) according to a first embodiment of the present invention. In the first embodiment, two robots 2 and 3 remove flashes from a work 6 that is mounted on a carriage 7.

The two robots 2 and 3, two visual sensors 4 and 5, and a personal computer (PC) 1 as an offline programming device are connected to each other in a local area network (LAN) using a communication line 10. Robot control units 2a and 3a of the robots 2 and 3 respectively are connected to the communication line 10, and control robot mechanism parts 2b and 3b respectively. Processing tools 8 and 9, and cameras 4b and 5b of the visual sensors 4 and 5, consisting of cameras and image processing units respectively, are fitted to the front ends of the arms of the robot mechanism parts 2b and 3b respectively, thereby making it possible to acquire images of the processing areas of the work 6. Image processing units 4a and 5a are connected to the cameras 4b and 5b respectively. The image processing units 4a and 5a are connected to the communication line 10. The work 6 to be processed by the processing tools 8 and 9 is mounted on the carriage 7. Although not shown in Fig. 1, a CAD system is connected to the communication line. The CAD system generates work shape model data, shape model data of each robot, and model data of a peripheral unit. These model data are stored in the offline programming device 1. Alternatively, the offline programming device 1 may generate the work shape model data, the shape model data of each robot, and the model data of the peripheral unit. These model data may be also stored in the offline programming device 1 via a recording medium.

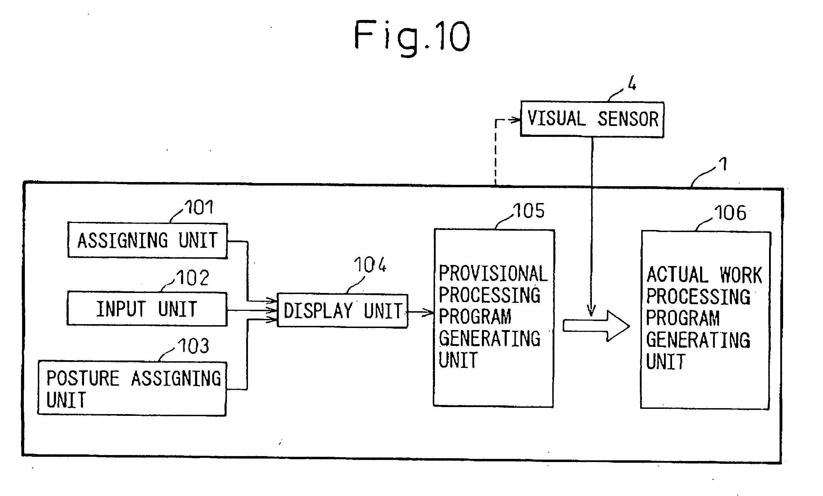

Fig. 10 is a block diagram of the processing program generating device according to the present invention. As shown in Fig. 10, according to the present invention, the offline programming device 1 includes a display unit 104, an assigning unit 101, and a provisional processing program generating unit 105. The assigning unit 101 assigns vertexes, an edge line, and a surface of an image of the work to be processed on the shape of the image of a work shape model displayed on the display unit 104. The provisional processing program generating unit 105 generates a provisional processing program based on this assignment. The offline programming device 1 further includes an actual work processing program generating unit 106 that makes the cameras 4b and 5b of the visual sensors 4 and 5 acquire images of the actual work 6, detects a position and a posture of the work, obtains a deviation between a position and a posture of the work shape model prepared by the offline programming device 1 and the detected position and the detected posture of the work, corrects the provisional processing program using the deviation amount as a correction amount, and generates an actual processing program. This is described in detail later.

Fig. 2 is a schematic diagram of a processing program generating device and a processing system according to a second embodiment of the present invention. In Fig. 2, elements that are identical with those of the device according to the first embodiment shown in Fig. 1 are designated by some reference numerals. In the second embodiment, the processing tool 8 is fitted to the one robot 2 and the other robot 3 holds the work 6 with a hand 11, so as to process the work 6.

The personal computer (PC) 1 as the offline programming device, the robot control units 2a and 3a of the robots 2 and 3 respectively, and the image processing unit 4a of the visual sensor 4 are connected to the communication line 10. The processing tool 8 and the camera 4b of the visual sensor 4 are fitted to the front end of the arm of the robot mechanism part 2b of the robot 2. The hand 11 is fitted to the front end of the arm of the robot mechanism part 3b of the robot 3 so that the hand 11 holds the work 6. In the second embodiment, a processing program is generated in a similar manner to that of the first embodiment, except for the following. While the carriage 7 moves the work 6 in the first embodiment, the robot 3 moves the work 6 in the second embodiment. With this arrangement, according to the second embodiment, when the robot 2 that is adapted to process the work with the processing tool 8 exceeds the stroke limit or generates interference with other objects, the robot 3 moves the work 6 to enable the robot 2 to process the work 6. In the first embodiment, the carriage 7 moves the work 6 in this case.

A method of generating a provisional processing program and a unit that generates this program according to the first and the second embodiments are explained below with reference to Fig. 10 and other drawings.

In the present invention, the assigning unit 101 of the offline programming device 1 assigns vertexes, an edge line, and a surface of a shape model of the work in the order of the processing. The offline programming device 1 generates a provisional processing program based on this assignment.

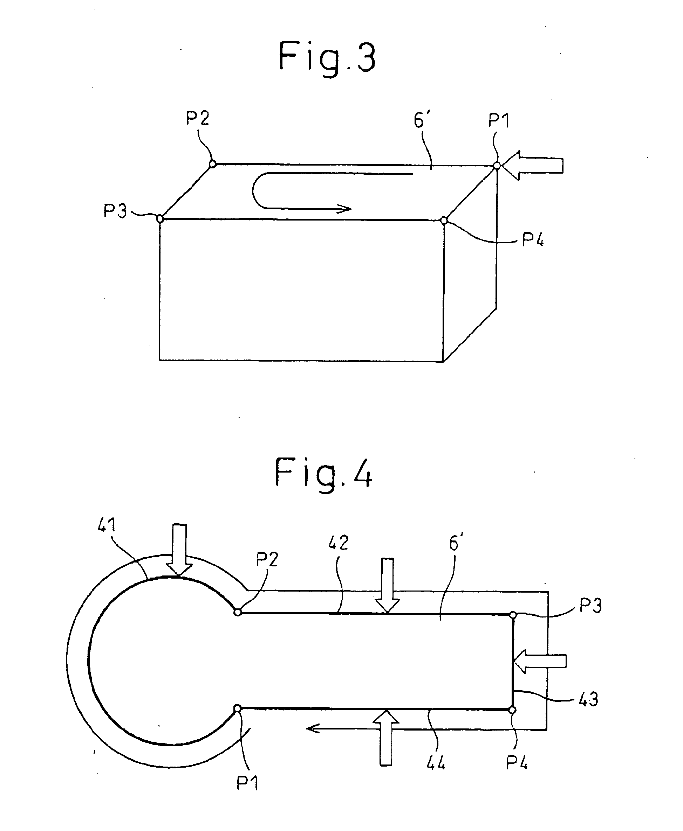

Fig. 3 is an explanatory diagram of a method of generating a provisional processing program by assigning vertexes. A CAD device generates work shape model data, or the offline programming device 1 generates work shape model data. A work shape image 6' is drawn on the display screen of the display unit 104 of the offline programming device 1, using coordinate values of the work shape model data. The assigning unit 101, that is, a pointing device such as a mouse, is used to assign vertexes of the work shape image 6' following the processing procedure. When the vertexes are assigned, the vertexes as teaching points are connected by straight lines in the assigning order, thereby forming a processing route. In the example shown in Fig. 3, the vertexes are assigned in the order of P1, P2, P3, P4, and P1 as the teaching points, and are sequentially connected between these teaching points by straight lines, so that the provisional processing program generating unit 105 generates the provisional processing program in which the straight lines are a processing route.

Fig. 4 is an explanatory diagram of a method of generating a provisional processing program by assigning an edge line to the work shape image 6'. In the example shown in Fig. 4, the assigning unit 101 such as a pointing device is used to assign an arc 41 of an edge line to the work shape image 6' on the display unit 104, thereby setting points P1 and P2 at both ends of the arc as teaching points. The arc 41 of the edge line connected between the teaching points P1 and P2 is programmed as a processing route. When the next edge line 42 of a straight line is assigned, points at both ends of the straight line are set as teaching points. Because one point of the straight line is already taught as the teaching point P2, the other point P3 at the other end of the edge line 42 is taught as a teaching point that follows the teaching point P2. As a result, a processing program is generated in which the assigned edge line 42 that connects between the teaching points P2 and P3 is taught as a processing route.

Next, the assigning unit 101 sequentially assigns an edge line (i.e., a straight line) 43 and an edge line (i.e., a straight line) 44 to set teaching points P4 and P1. As a result, the provisional processing program generating unit 105 generates a provisional program in which a line that connects between the teaching line P1 and the teaching line P2 is taught as an arc processing route, a line that connects between the teaching point P2 and the teaching point F3 is taught as a straight line route, a line that connects between the teaching point P3 and the teaching point P4 is taught as a straight line route, and a line that connects between the teaching point P4 and the teaching point P1 is taught as a straight line route.

When mixed vertexes-and-edge lines are assigned, a processing route is generated by connecting between the teaching points based on the assigned order. When a vertex is assigned first and another vertex is assigned next, a processing route is generated by connecting between these vertexes with a straight line. When an edge line and a vertex are assigned, a processing route of an edge line is generated between both ends of the edge line, and a straight line processing route is generated between a teaching point at one end of the edge line and the assigned vertex. When a vertex and an edge line are assigned, it is sometimes unclear which one of both ends of the edge line is to be connected to the teaching point of the vertex with a straight line. In this case, an end point of the edge line that is to be connected to the assigned vertex is further assigned as a vertex.

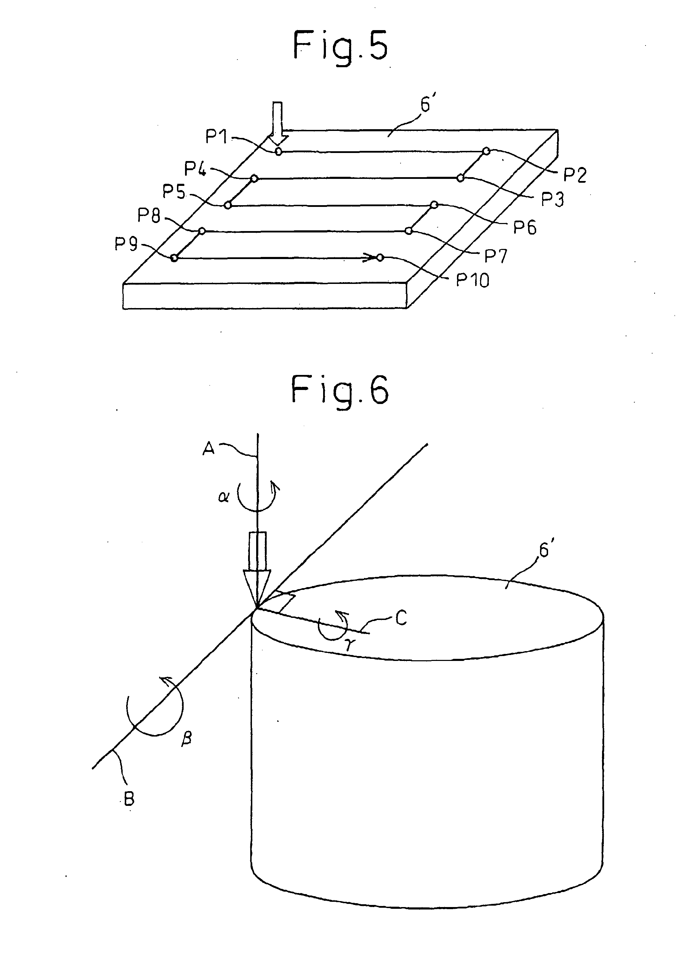

Fig. 5 is an explanatory diagram of a method of generating a provisional processing program by assigning a surface.

In order to assign a surface, the input unit 102 assigns a processing start point, and inputs a processing direction, a processing pitch, and a pitch direction. Based on this, a processor of the offline programming device 1 generates a route that moves from a processing start point P1 as a teaching point to the input processing direction. In this case, a point P2 that is before the cross point of the extension of the route and the edge line of the work by an input pitch amount is taught as an end point of the route. Next, a route that moves to the input pitch direction by an input processing pitch amount is formed, and an end point P3 of this route is set as a teaching point. Next, a route that moves from this teaching point to a direction opposite to the input processing direction is generated. A point P4 that is before the cross point of the extension of the route and the edge line of the work by an input pitch amount is taught as an end point of the route, in the manner as described above. Thereafter, this operation is continued. When a route that moves by a processing pitch crosses the edge line of the work during the generation of this route, the processing program for processing the surface ends without generating the route that moves by this processing pitch.

In the example shown in Fig. 5, the pointing device is used to assign the processing start point P1 of the image 6' of the work on the display unit 104. Based on the input processing direction and the input processing pitch and its direction, the teaching points P2, P3, P4, P5, P6, P7, P8, P9, and P10 are sequentially taught. The teaching points are sequentially connected with straight lines, thereby generating a processing route.

Fig. 6 is an explanatory diagram of a method of setting a posture of a processing tool. A posture of the processing tool is set at the processing start point (i.e., at the first teaching point). The provisional processing program generating unit 105 generates a provisional processing program for processing to the generated processing route in the set posture of the processing tool.

When the posture assigning unit 103 is used to assign the input of a posture of a processing tool, the image of the processing tool is displayed on the screen of the display unit 104. The posture of the processing tool can be set while visually observing the posture on the screen. First, a normal line A of a surface formed by the processing route at this teaching point is obtained. An angle α around this normal line A is obtained. A tangent B to the processing route is obtained. An angle β around the tangent direction is obtained. A normal line C on the surface formed by the tangent B and the normal line A is obtained. An angle γ around the normal line C is set. Based on these settings, the posture of the processing tool is determined, and is input.

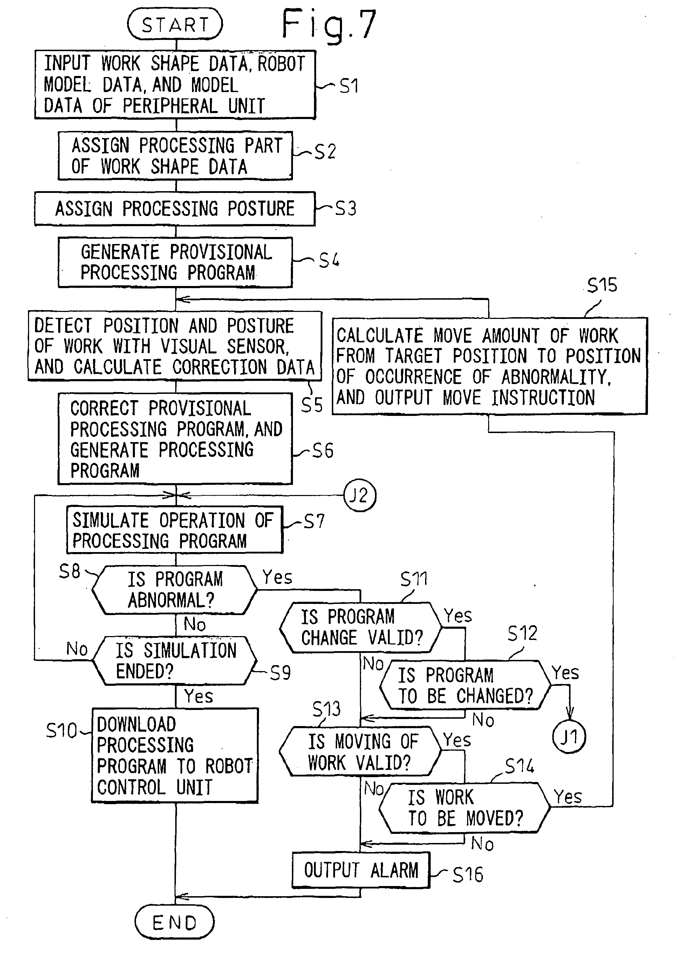

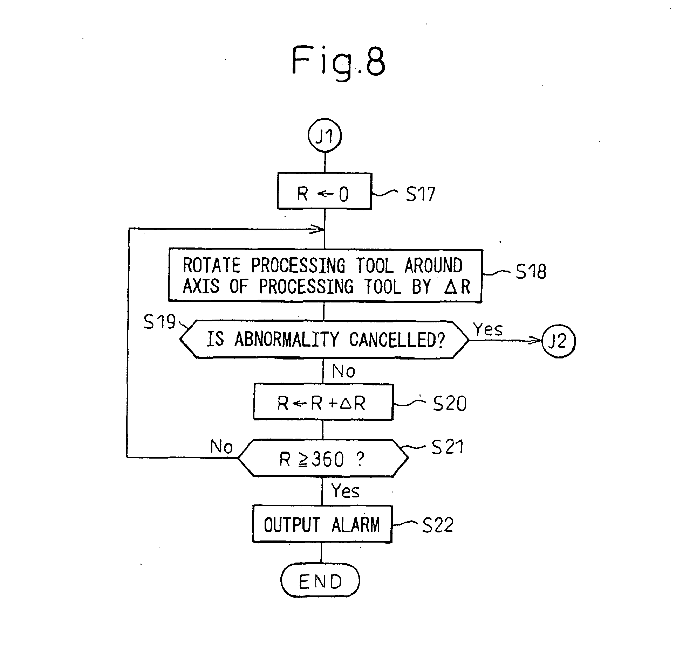

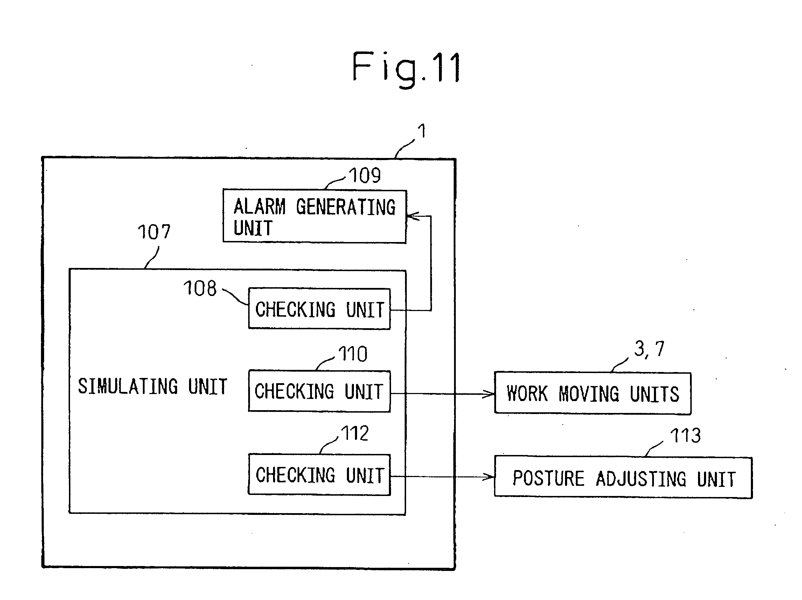

Fig. 7 and Fig. 8 are flowcharts of the processing program generation processing that the processor of the offline programming device 1 mainly carries out according to the first and the second embodiments. The flowcharts shown in Fig. 7 and Fig. 8 are explained below with reference to Fig. 10 and Fig. 11.

First, the work shape data generated by the CAD device or the like is read. Further, model data of the robot and model data of a peripheral unit are also read (step S1). Based on the read data, at least the image 6' of the work shape model is displayed on the display screen of the display unit 104 of the offline programming device 1. The assigning unit 101 assigns vertexes, an edge line, or a surface to the displayed image 6' of the work shape model to assign a processing part, in the manner as described above (step S2). In assigning a surface, the input unit 102 inputs a processing start point, a processing direction, a processing pitch, and a pitch direction, in the manner as described above. Further, an image of a processing tool at the processing starting teaching point in a posture input state, is displayed on the display unit 104. The posture assigning unit 103 inputs angles α, β, and γ for determining a posture of the processing tool, thereby setting the processing tool posture, in the manner as described above (step S3).

Based on the assigned vertexes, the edge line, or the surface and the input setting data, the processing program generating unit 105 generates a processing route between the teaching points in the input order, thereby generating a provisional processing program that holds a setting processing tool posture to the processing route (step S4).

Next, the processor of the offline programming device 1 outputs an instruction to the robot control units 2a and 3a to acquire images of the work 6 to be processed, detects a position and a posture of the work 6, and calculates correction data (step S5). In the first embodiment, the following explanation is carried out based on the assumption that the processing program of the robot 2 is generated.

The robot control unit 2a receives the instruction to acquire images of the work, moves the robot mechanism part 2b to a predetermined imaging position, and outputs an imaging instruction to the image processing unit 4a of the visual sensor 4. The image processing unit 4a acquire images of the work with a camera to detect a position and a posture of the work, and transmits data of the image to the offline programming device 1. The processor of the offline programming device 1 calculates a deviation between the position and the posture of the work shape model that is input at step S1 and the detected position and the detected posture of the work, and obtains correction data of the coordinate values of each teaching points, in the conventional method. Alternatively, the processor obtains correction values of the points of origin and the posture in the coordinate system that represents the position and the posture of the work shape model that is input at step 51 (step S5).

Based on the obtained correction values, the actual work processing program generating unit 106 corrects the provisional processing program obtained at step S4, and generates the actual processing program for actually processing the work 6 (step S6). An accessing point to the processing starting teaching point and a leaving point from the processing end teaching point are added to the start and the end of the processing program of the corrected processing route, based on the parameters of a speed, a distance, and a direction set in advance. Further, a move instruction from the accessing point to the processing start point and a move instruction from the processing end point to the leaving point are added. A processing tool start instruction to start the processing is added to the processing start point, and a processing tool end instruction to end the processing is added to the processing end point.

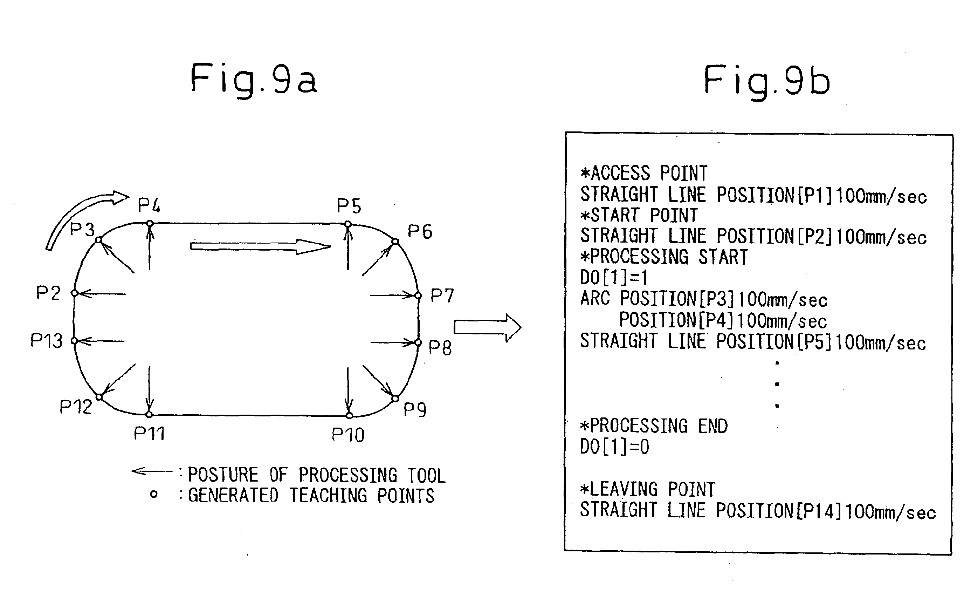

Fig. 9a and Fig. 9b are explanatory diagrams of a processing route and a generated processing program. Fig. 9a shows a processing route obtained by assigning vertexes and edge lines and by correcting teaching points based on images of the work, where P2 is a processing start point. In Fig. 9a, a processing route is generated as follows. An arc route is generated from the processing start point P2 to the teaching points P3 and P4. A straight line route is generated from the teaching point P4 to the teaching point P5. An arc route is generated from the teaching point P5 to the teaching points P6 and P7. A straight line route is generated from the teaching point P7 to the teaching point P8. An arc route is generated from the teaching point P8 to the teaching points P9 and P10. A straight line route is generated from the teaching point P10 to the teaching point P11. An arc route is generated from the teaching point P11 to the teaching points P12 and P13. As shown in Fig. 9b, in the processing program of the processing route, an accessing point position P1, the processing start point P2, and speed instructions of moves to the accessing point position P1 and the processing start point P2 are added at the beginning. Last, a leaving point position P14 and a speed instruction of a move to the leaving point are added. An input signal DO [1]=1 that shows a processing start instruction is added to the processing start point. An output signal DO [1]=0 that shows a processing end instruction is added to the processing end point.

The processing program for actually processing the work is generated in the manner as described above. According to the first and the second embodiments, a simulation unit 107 further simulates the operation of the generated processing program as shown in Fig. 11. Checking units 108, 110, and 112 check presence of abnormality such as the operation, in excess of a stroke limit of each axis of the robot 2 that processes the work, or interference, in the simulated operation of the processing program, and correct the abnormality when it is present. Therefore, prior to the execution of the simulation of the operation of the processing program generated at step S6, the coordinate values of the work shape model, the robot model, and the model of the peripheral unit displayed on the display screen of the display unit 104 are corrected based on the correction data obtained at step S5. Then, the simulation unit 107 starts simulating the operation of the processing program (step S7), and detects the presence of an abnormality (step S8). When the simulation of the operation of the processing program ends without detecting the presence of the abnormality (step S9), the processing program is downloaded to the control unit 2a of the robot 2 (step S10). Thus, the generation of the processing program ends.

On the other hand, when an abnormality is detected at step S8, the processor decides whether a program change is set valid or invalid (step S11). When the program change is set valid, the checking unit 108 decides whether the execution of the program change is selected (YES or NO) (step S12). On the other hand, when the program change is not set valid, or when the program change is not selected even when the program change is set valid, the checking unit 108 decides whether the moving of the work is set valid (step S13). When the moving of the work is set valid, the checking unit 108 decides whether the execution of the work moving is selected (YES or NO) (step S14). When neither the change of the program nor the moving of the work is set valid, or when the changing of the program and the moving of the work are not selected even when these are set valid, the checking unit 108 detects these facts, and makes an alarm unit 109 generate an alarm (step S16) to indicate that the execution of the processing program will cause an occurrence of abnormality.

When the checking unit 110 finds that the moving of the work is set valid and that the instruction to move the work is input at step S14, the processor executes the processing of step S15. The processor outputs a move instruction to move the work from a target position of the processing route in which abnormality occurs (i.e., a front end position of the processing tool on the orthogonal coordinates) to the abnormality occurrence position (i.e., a position on the orthogonal coordinates), and makes the work moving units 3 and 7 move the work 6. In this case, according to the first embodiment shown in Fig. 1, because the work moving unit is the carriage 7, the carriage 7 is moved. According to the second embodiment, because the work moving unit is the robot 3, the robot 3 is moved. With this arrangement, when any one of axes of the robot reaches a stroke limit and generates an abnormality, the work is moved to reach a target processing position of the work at a position of the robot where the abnormality is generated. Therefore, the abnormality can be cancelled. When abnormality occurs due to the occurrence of interference, this interference has a large potential of being avoided.

Coming back to step S5 again, the processing following step S5 is carried out repeatedly. In other words, the visual sensors 4 and 5 acquire images of the work 6 to obtain correction data. The actual work processing program generating unit 106 corrects the provisional processing program based on the correction data, thereby generating the processing program. Then, the simulation unit 107 simulates the processing operation of the processing program.

On the other hand, when the execution of the changing of the processing program is selected at step S12, "0" is first stored into the register which stores a rotation amount R of the processing tool (step S17). A posture adjusting unit 113 rotates the processing tool around the axis of the processing tool (i.e., around a Z axis of the tool coordinate system) by a rotation amount ΔR, thereby changing each axial position of the robot and the shape data of the robot (step S18). The checking unit 112 decides whether the abnormality is cancelled. In other words, the checking unit 112 decides whether each axis of the robot is within the stroke limit or whether the robot is interfering with other object (such as a peripheral unit and the work) (step S19).

When the abnormality is not cancelled, the posture adjusting unit 113 adds the ΔR to the register that stores the rotation amount R (step S20), and decides whether the rotation amount reaches 360 degrees or above (step S21). When the rotation amount does not reach 360 degrees, the process returns to step S8. The posture adjusting unit 113 rotates the processing tool around the axis of the processing tool by the set rotation amount ΔR, and judges whether the abnormality is cancelled. Thereafter, these processing are repeated. When the rotation amount reaches 360 degrees at step S21, the posture adjusting unit 113 decides that the abnormality is not cancelled based on the change of the processing program by changing the posture of the processing tool, and outputs an alarm (step S22), thereby ending the processing.

When cancellation of the abnormality is detected at step S19, after returning to step S7, the operation of the program is simulated.

As described above, when the processing program is generated, the processing operation of the processing program is simulated. When the processing operation of the processing program is simulated to the end of the program without detecting abnormality (step S9), the processing program is downloaded to the robot control units 2a and 3a (step S10). Then, the processing ends.

In the above embodiments, the work 6 can be moved by mounting the work on the carriage 7 or by making the robot hold the work 6, thereby correcting the work position. However, when the carriage 7 is not present or when only one robot is available, a hand can be fitted to the front end of the arm of one robot instead of the processing tool that has been fitted to the front end of the arm. The robot fitted with this hand moves the work. Thereafter, the processing tool can be fitted to the front end of the arm of the robot again in place of the hand, and the processing can be proceeded.

Although the invention has been shown and described with exemplary embodiments thereof, it should be understood, by those skilled in the art, that the foregoing and various other changes, omissions and additions may be made therein and thereto without departing from the spirit and the scope of the invention.

## Claims

1. A processing program generating device (100) that generates a processing program for processing a work (6) with a robot (2), and that includes a display means (104) for displaying a shape model (6') of the work on a display screen,
**characterized in that** the processing program generating device comprising:
a means (101) for assigning both or one of vertexes and an edge line of the shape model (6') of the work displayed on the screen;
a means (103) for assigning a posture of a processing tool (8);
a means (105) for generating a route based on both or one of the vertexes and the edge line that are assigned, and generating a provisional processing program so that the processing tool (8) becomes in the assigned posture of the processing tool in the route;
a visual sensor (4) that acquires an image of an area of the work (6) processed by the processing tool (8), and detects a position and a posture of the work; and
a means (106) for correcting the generated provisional processing program based on the position and the posture of the work (6) detected by the visual sensor (4), thereby generating an actual processing program to be used to process the actual work.

2. A processing program generating device (100) that generates a processing program for processing a work with a robot (2), and that includes a display means (104) for displaying a shape model (6') of the work on a display screen,
**characterized in that** the processing program generating device comprising:
a means (102) for assigning a surface of the work to be processed on the displayed screen, and inputting a processing start point, a processing direction, a pitch amount, and a pitch direction;
a means (103) for setting a posture of a processing tool (8);
a means (105) for generating a route which moves on the assigned surface from the processing start point while shifting the route in an input processing direction by the pitch amount, and generating a provisional processing program so that the processing tool (8) becomes in the posture of the processing tool set in each route;
a visual sensor (4) that acquires an image of an area of the work (6) processed by the processing tool (8), and detects a position and a posture of the work; and
a means (106) for correcting the generated provisional processing program based on the position and the posture of the work (6) detected by the visual sensor (4), thereby generating an actual processing program to be used to process the actual work.

3. The processing program generating device according to claim 1, wherein the means (105) for generating the provisional processing program sets the assigned vertexes as teaching points, sets points at both ends of the assigned edge line as teaching points, sets a straight line route between the teaching point of the assigned vertexes and the other teaching point, sets an edge line route between the assigned teaching points at both ends of the edge line, thereby sequentially obtaining a continuous route in the assigned order of the vertexes and the edge line, and generates the provisional processing program for the generated route so that the processing tool (8) becomes in the assigned posture of the processing tool.

4. The processing program generating device according to any one of claims 1 to 3, wherein the means (106) for generating the actual processing program to be used to process the actual work corrects coordinate positions and the posture of the teaching points prepared by the generated provisional processing program, or the points of origin and the posture in a coordinate system that defines the teaching points prepared by the provisional processing program, thereby generating the actual processing program to be used to process the actual work.

5. The processing program generating device according to any one of claims 1 to 4, wherein the visual sensor (4) includes a camera (4b), and the camera (4b) is fitted to a robot (2) that has the processing tool (8).

6. The processing program generating device according to any one of claims 1 to 5, wherein the processing tool (8, 9) is fitted to a plurality of robots (3, 3), and each robot (2, 3) processes one work (6).

7. The processing program generating device according to any one of claims 1 to 6, the processing program generating device further comprising: a means (107, 108) for simulating the operation of the generated actual processing program to be used to process the actual work, and checking whether the processing can be carried out normally in all the routes; and a means (109) for generating an alarm when an abnormality is detected.

8. The processing program generating device according to any one of claims 1 to 6, the processing program generating device further comprising: a means (107, 110) for simulating the operation of the generated actual processing program to be used to process the actual work, and checking whether the work is within a permissible moving range of each axis of the robot in all the routes; and a means (3, 7) for moving the work to a processable position when it is detected that the work exceeds the permissible moving range.

9. The processing program generating device according to claim 8, the processing program generating device further comprising: a first robot (2) that has the processing tool (8) and processes the work; and a second robot (3) that holds the work (6), wherein the second robor (3) constitutes the means (3, 7) for moving the work to the processable position.

10. The processing program generating device according to claim 8, wherein the work (6) is mounted on a movable carriage (7), and the carriage constitutes the means (3, 7) for moving the work to the processable position.

11. The processing program generating device according to any one of claims 1 to 10, the processing program generating device further comprising: a means (107, 112) for simulating the operation of the generated actual processing program to be used to process the actual work, and checking the occurrence of interference between the robot and other objects in all the routes; and a means (113) for correcting the position and the posture at the teaching points prepared by the processing program to a position and a posture for avoiding interference when the interference is detected.
